# EUROPEAN PATENT SPECIFICATION

(11) **EP 3 653 862 B1**
(45) Date of publication and mention of the grant of the patent: **19.08.2026**
(21) Application number: 19209273.2
(22) Date of filing: 14.11.2019
(51) Int. Cl.: F02D 41/14, F02D 41/02

(54) **PROCESSING UNIT AND METHOD FOR CONTROLLING AN INTERNAL COMBUSTION ENGINE**
VERARBEITUNGSEINHEIT UND VERFAHREN ZUR STEUERUNG EINES VERBRENNUNGSMOTORS
UNITÉ DE TRAITEMENT ET PROCÉDÉ DE COMMANDE D'UN MOTEUR À COMBUSTION INTERNE

(30) Priority: 14.11.2018 IT 201800010312
(43) Date of publication of application: 20.05.2020
(73) Proprietor: FPT Motorenforschung AG, 9320 Arbon (CH)
(72) Inventor: CHINELLATO, Oscar, 9327 TÜBACH (CH)
(74) Representative: Studio Torta S.p.A.

(56) References cited:
- FR-A1- 3 059 358
- US-A1- 2018 202 373

## Description

### Cross-reference to related applications

This patent application claims priority from Italian patent application no. 102018000010312 filed on November 14, 2018.

### Technical field of the invention

The invention relates to the field of internal combustion engine control and, in particular, to the field of the relative emissions.

### State of the art

The emissions of internal combustion engines are substantially limited and/or neutralized through the EGR valve, namely the valve that controls the flow of exhaust gases recirculated through the cylinders of the internal combustion engine, as well as through the addition of a urea-based reducing agent upstream of an SCR catalytic converter.

Whereas the EGR valve is aimed at the reduction of NOx at the level of the internal combustion engine, the exhaust gas after-treatment system (ATS) is aimed at neutralizing the NOx already produced by the engine before it is released into the atmosphere.

There are also other techniques aimed at limiting the production of pollutants and they affect the times and the ways in which the fuel is injected into the cylinders of the engine as well as the valve opening times. In spark-ignition engines, a parameter affecting the production of pollutants is the time in which the air/fuel mixture is ignited inside the cylinders.

Therefore, the EGR and the techniques for the adjustment of the combustion control parameters affect primary emissions, namely upstream of the ATS, whereas the control of the ATS intervenes in the reduction of the pollutants, thus determining the secondary emissions that are released into the atmosphere.

Legislators currently adopt an emission reduction strategy that is based on movable time windows with an amplitude equal to a predetermined work value generated by the engine or to a reference CO2 value (ECE 582/2011) or to a predetermined travelled distance.

Therefore, if the vehicle drives slowly, the sliding time window is larger in terms of time compared to when it drives fast, etc..

Similarly, in the field of passenger vehicles, the reference value is the travelled distance rather than the target generated work.

Each window has a sliding amplitude such that the overall work generated in the window is strictly greater than a predetermined reference value.

The emission of a species needs to be averaged over a sliding window, which, according to the description above, has an amplitude that is such as to correspond to a constant work value or travelled distance.

Generally speaking, movable windows applied to work are typical for commercial and industrial vehicles, whereas movable windows applied to the travelled distance are typical for passenger vehicles, such as cars.

The concept on which the strategy introduced by legislators is based is that of averaging the emissions over said movable windows, so as to offer a certain emission flexibility which is weighted based on the generated work. In other words, if the grams or litres of a given pollutant must be smaller than a limit value per kWh of generated work, this means that the vehicle, while carrying out said work, can emit more in some conditions and less in other conditions, but what matters is that the average of the emissions is anyway smaller than said limit value per kWh (or unit of travelled distance).

The windows are movable because they slide along the time axis, becoming larger or narrower, so that each window represents a target value of carried out work, for example 30kWh. In other words, if the emission limits are exceeded, this needs to be compensated by emitting less within the same observation window and this must be fulfilled by taking into account the fact that the windows are movable sliding forward in time.

Evidently, the emission value per kWh of work can be calculated as the integral of the emissions in any sliding work window, divided by the work carried out in the window itself, and cannot exceed said limit value (of the emissions per kWh). The time amplitude is such that the integral of the work over the time of the amplitude itself is strictly equal to a predetermined value. Therefore, since the predetermined value is known, the amplitude of the sliding movable time window can be obtained.

If said limit value is never exceeded in any operating condition, the aforesaid emission limits are definitely fulfilled in any sliding window with any greater amplitude. However, this means restricting the observation window to a unitary interval of work done. Unfortunately, however, there are operating conditions in which said threshold value can hardly be respected, especially during sudden accelerations and when the ATS is not perfectly efficient. Indeed, the SCR catalytic converter, which is part of the ATS, needs to reach at least 250°C in order to be efficient.

For this reason, a sliding window which is such as to correspond to 20 or 30kWH of generated work allows a necessary emission flexibility to be obtained.

As long as the acceleration and speed profiles are known, a compromise can be reached in the adjustment of the operating parameters of the engine and of the ATS in order to respect the aforesaid limits. However, when the vehicle is used "freely", namely without restrictions, the emissions can exceed the aforesaid limits. Hence, it is difficult for said limits to be fulfilled in any operating condition, except for adjusting the operating parameters of the engine in such a restrictive manner that jeopardizes, as a consequence, the performances thereof.

If not specifically excluded by the detailed description below, the information contained in this part should be considered as an integral part of the detailed description itself.

US2018202373A1 discloses a method for operating an internal combustion engine with an exhaust aftertreatment device, using sliding monitoring windows to measure and predict emissions. The system estimates future emissions based on current engine and aftertreatment conditions, and adaptively adjusts engine or aftertreatment parameters to keep emissions within legal limits. The monitoring windows can be dynamically defined based on work or distance. The document does not disclose that the sum of the first and second sliding windows (the "second amplitude") is in a fixed or variable ratio to the legal window's amplitude.

### Summary of the invention

The object of the invention is to indicate a method according to claim 1, a computer program according to claim 11, a computer-readable storage medium according to claim 12, and a processing unit configured to control an internal combustion engine according to claim 13, which are capable of fulfilling the emission limits set for the pollutants produced by the internal combustion engine of a terrestrial vehicle, both on-road and off-road, regardless of the operating conditions to which the vehicle is subjected.

The idea on which the invention is based is that of considering a first and a second sliding time windows with an overall amplitude which is smaller than the one of the sliding time window established by law. Preferably, the second window has a smaller amplitude than the first window.

For the sake of simplicity, hereinafter the term "time" will be left out.

The first window has a first end and a second end: the first end or initial end is in the past, whereas the second end or final end is in the present, namely in the current instant of observation. The second end is contiguous with the first window and has a first end or initial end coinciding with the second end of the first window and a second end or final end extending in the future.

Since the amplitude of the sliding observation window defined by law has a variable amplitude in terms of time, but is constant in terms of carried out work, then the overall amplitude of the set of the first and the second sliding windows is in a predetermined ratio, which is smaller than 1, with said sliding window defined by law.

This strategy measures the quantity of pollutant emitted in the first window, for example NOx through a sensor arranged downstream of the SCR catalytic converter, and the quantity of pollutant that will be emitted in the second (future) window is estimated based on the operating conditions of the engine of the relative ATS.

The operating conditions of the engine and of the ATS are sampled in a sub-window with an amplitude that is many times smaller than the first window and having a first end or initial end in the past and a second end or final end coinciding, in the present, with the second end of the first sliding window. Therefore, this sub-window defines the calculation base to predict the estimation of the quantity of pollutant that will be emitted in the future window based on the last operating conditions of the engine+ATS assembly.

Based on this estimation, the overall emissions of the set of said first and second sliding windows are calculated. Evidently, the system cannot act upon the first window, because it is already gone, but it can only act upon the second window; therefore, if with the current operating conditions of the engine and of the ATS the overall emissions exceed the limits defined by law, the calculation of the future emissions is carried out again assuming to act, at first, upon the primary emissions, namely on the control parameters of the combustion of the engine and on the EGR.

If, even in this case, the results show that the future emissions, namely the ones of the second sliding window, are not capable of making up for past emissions, namely the ones of the first sliding window, said control parameters are set so as to minimize the primary emissions and, at the same time, ATS heating strategies are activated.

There can be different ATS control strategies, for example a valve can be activated, which chokes the intake and/or exhaust duct of the internal combustion engine so as to increase the pumping losses that cause an increase in the temperature of the exhaust gases. Other possible strategies involve the heating of the ATS by means of fuel after-injections or by activating suitable electric heaters.

Vice versa, when the emission conditions improve, at first, the ATS heating means are deactivated and, then, the operating parameters of the engine are gradually changed so as to be less restrictive.

The minimization of the primary emissions and the simultaneous activation of the ATS heating strategies are the sole measures available that can be adopted by the system in order to remain within the emission limits provided for by law.

When the future emissions are deemed to be low enough to make up for past emissions, the ATS heating strategies are gradually deactivated and, subsequently, combustion control parameters adjustments as well as less restrictive EGR strategies are adopted.

According to a preferred variant of the invention, the first sliding window is not in a fixed dimensional ratio with the amplitude of the observation window defined by law. For example, during the activation of the ATS heating strategies, high emissions could be measured, which cannot be compensated by the future window. In this case, extending the first sliding window back in time can make sense, in order to take into account the repetition of the exceeding of the emissions. This allows past emissions to be correctly estimated so as to adequately limit future emissions.

Evidently, the second sliding window can be dynamically extended/reduced as well, so as not to excessively jeopardize the performances of the vehicle. In other words, the first and the second window have a fixed or variable amplitude ratio relative to one another. The overall amplitude of the set of the first and the second sliding windows is always smaller than the sliding window defined by the legislator.

If this overall amplitude is many times smaller than the amplitude of the sliding window defined by the legislator, the compensating effect enabled by the mechanism provided for by the legislator is nullified. If, on the other hand, said amplitude is approximately equal to the one defined by the legislator, there is a risk of low reactivity of the system, thus risking a too slow intervention, exceeding the limits provided for by the legislator.

It is deemed that a good compromise is obtained when said overall amplitude is 1/2 - 1/10 of the amplitude of the sliding window defined by the legislator.

The dependant claims describe preferred embodiments of the invention, thus forming an integral part of the description.

### Brief description of the figures

Further objects and advantages of the invention will be best understood upon perusal of the following detailed description of an embodiment thereof (and of relative variants) with reference to the accompanying drawings merely showing non-limiting examples, wherein:
figure 1 shows a composition of two movable work windows contiguous with one another and on which the invention is based;
figure 2 shows the two movable windows of figure 1 overlapping the sliding window of carried out work and defined by the legislator;
figure 3 shows a sub-window of the first window of the two windows of figure 1;
figure 4 shows a flowchart of a preferred embodiment of the invention;
figure 5 schematically shows an internal combustion engine provided with an exhaust gas after-treatment device, which is controlled based on the method according to the invention.

In the figures, the same numbers and the same reference letters indicate the same elements or components.

For the purposes of the invention, the term "second" component does not imply the presence of a "first" component. As a matter of fact, these terms are only used as labels to improve clarity and should not be interpreted in a limiting manner.

The elements and features contained in the different preferred embodiments, drawings included, can be combined with one another, without for this reason going beyond the scope of protection of this patent application, as described hereinafter.

### Detailed description of embodiments

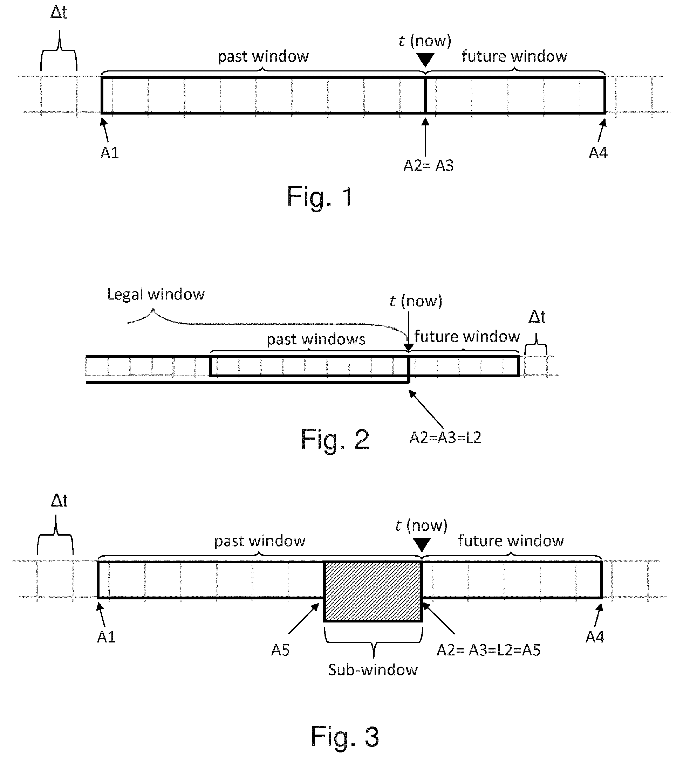

Figures 1 - 3 show movable work windows according to the invention, which are multiples of a time unit or Δt.

The current instant is indicated with the label "t(now)", which separates the past from the future.

The past is on the left, whereas the future is on the right of t(now); however, an opposite configuration is possible. There are defined a first sliding window indicated with the label "past window", hereinafter referred to as "Pw", and a second sliding window indicated with the label "future window", hereinafter referred to as "Fw", which is contiguous with the first sliding window Pw.

Pw relates to the emission actually produced by the assembly consisting of
- internal combustion engine and
- exhaust gas after-treatment device (ATS) and
measured through sensors or estimated by means of one or more known models.

Hereinafter said assembly is indicated, for the sake of brevity, with "engine+ATS".

For example, the quantity of NOx released into the atmosphere can be measured by means of a sensor arranged downstream of the SCR catalytic converter, generally referred to as NOx tailpipe sensor.

Pw has a first end A1 and a second end A2. While the first end extends back in time, the second end is in the present instant t (now) .

Fw has a first end A3 coinciding with A2 and a second end A4 forward in the future.

With reference to figure 2, the sliding window defined by the legislator is indicated with the label "Legal window" and is referred to, for the sake of brevity, as "Lw".

Lw is many times greater than the amplitude given by the sum of the amplitudes of Pw and Fw.

According to the aforesaid principle, the following steps are carried out:
- measuring an average emission of at least one pollutant released into the atmosphere within the Legal window Lw;
- comparing said average emission with a limit value Lim of emissions per kWh.

Lw has a first end not shown in the figure, because it is more back in time than A1, and a second end L2 coinciding with t(now) and, hence, with A2 and A3.

According to the invention, the emissions produced in Pw are measured and the future emissions to be produced in Fw are estimated. The estimation of future emissions is carried out based on the current operating conditions of the engine+ATS assembly.

Therefore, the operating parameters of the engine+ATS assembly are adjusted based on an average emission calculated over said first window Pw and second window Fw. Figure 3 shows a sliding sub-window of Pw indicated with the label "Sub-window" and referred to as "Sw". Said sub-window has a first end A5, which is intermediate between A1 and A2, and a second end A5 coinciding with t(now) and, hence, with A2 and A3.

Sw is used to average the operating conditions of the engine+ATS assembly and to estimate the future emissions of Fw. Regardless of the estimation model used, the estimation of future emissions is more stable if, rather than the instantaneous conditions in t(now), it takes into account average values of a sliding interval, even with an amplitude that is much smaller than Pw. For example, if the temperature of the ATS constantly increases or decreases within Pw, it is more advantageous to consider the last instants of Pw in order to estimate the future emissions of Fw.

The window Sw can have a fixed amplitude or can be in a predetermined ratio relative to Pw. Furthermore, Sw preferably is smaller than or, at most, equal to Fw.

The amplitude of Fw preferably is smaller than the amplitude of Pw. This implies having a particularly reactive system. When, on the other hand, Fw is equal to or greater than Pw, this leads to slower system, namely a system that is less inclined to making up for the emissions possibly exceeding the limits defined by law.

According to the invention, the following steps are carried out in cyclic succession:
- (Step 1) generation of a first (Pw) and a second (Fw) contiguous sliding windows over time, wherein said first window comprises an initial end (A1) back in the past and a final end (A2) in the current instant (t(now)) and said second window comprises an initial end (A3) in said current instant (t(now)) and a final end (A4) forward in the future, wherein a second overall amplitude of said first and second sliding windows is less than said first amplitude,

(Step 2) measurement of a first emission of at least one pollutant released in said first window;
(Step 3) estimation of a second emission of said at least one pollutant in said second window based on the current combustion parameters of the internal combustion engine and current operating conditions of said assembly;
(Steps 7 to 8) controlling said assembly so that said an average emission of said at least one pollutant calculated (Step 4) over said first and second sliding windows is less than said limit emission value (Lim).

More preferably, said average emission, which is measured over Pw and estimated over Fw, is only slightly smaller than the limit emission value (Lim), so as to avoid discouraging the performances of the engine+ATS assembly.

Therefore, if the average emission exceeds the limit defined by law, at first the operating parameters of the engine are adjusted up to the relative limit parameters. However, in case this is not sufficient, ATS heating procedures are activated.

When, subsequently, the aforesaid average emission becomes smaller than the limits defined by law, the ATS heating procedures are deactivated and, then, less restrictive combustion parameters are set.

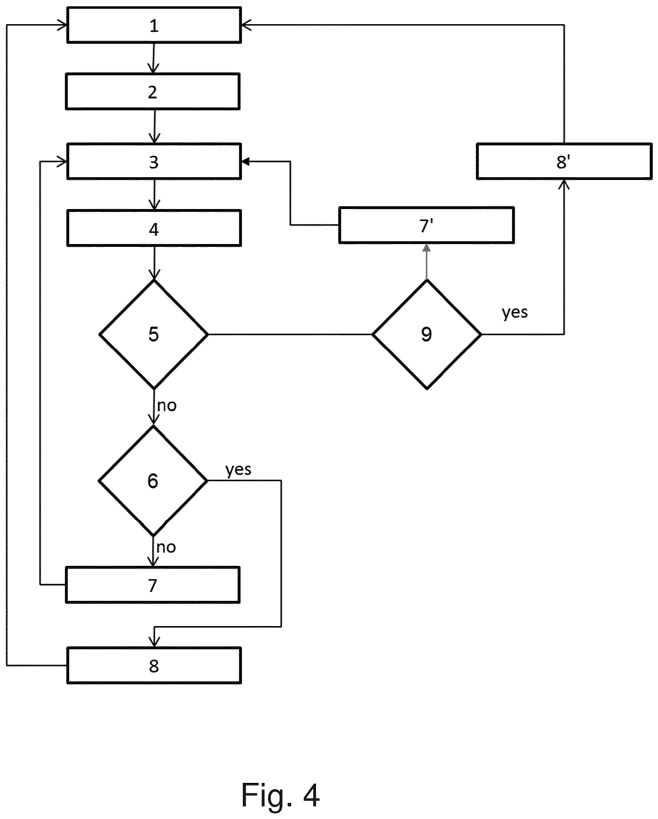

More preferably, with reference to figure 4, the following steps are carried out in cyclic succession:
(Step 1) generation of a first (Pw) and a second (Fw) contiguous sliding windows over time, wherein said first window comprises an initial end (A1) back in the past and a final end (A2) in the current instant (t(now)) and said second window comprises an initial end (A3) in said current instant (t(now)) and a final end (A4) forward in the future, wherein a second overall amplitude of said first and second sliding windows is less than said first amplitude,
(Step 2) measurement of a first emission of at least one pollutant released in said first window;
(Step 3) estimating a second emission of said at least one pollutant in said second window based on current combustion parameters of the internal combustion engine and current operating conditions of said ATS;
(Step 4) calculation of an average emission of said at least one pollutant calculated over said first sliding window and over said second (work or distance) sliding window;
(step 5) comparison of said average emission with a limit value (Lim) of emissions per kWh or per travelled distance unit, if said average emission is less than or equal to (5->yes) said limit value (Lim)
(Step 9) verification of whether the ATS heating means are active, if so then (9 = yes)
(Step 8') deactivation of the ATS heating means and resuming from step 1, otherwise (9->no)
(Step 7') modification of said combustion parameters so as to increase a primary emission of said internal combustion engine and resuming from said estimation (Step 3),
   if, otherwise, said average emission is greater than (5->no) said limit value (Lim), then
(Step 6) verification of said current combustion parameters in respect to said limit combustion parameters, if it results that said current combustion parameters do not coincide (6->no) with said limit combustion parameters
(Step 7) modification of said combustion parameters so as to reduce a primary emission of said internal combustion engine and resuming from said estimation (Step 3), otherwise (6->yes)
(Step 8) activation of said ATS heating means.

Steps 7 and 8 correspond and are contrary to steps 7' and 8', respectively. In other words, if in step 7 more restrictive operating parameters are implemented, in step 7' less restrictive operating parameters are implemented. The second amplitude, which is given by the sum of the amplitudes of Pw and Fw, is preferably fixed or is in a fixed ratio with said first amplitude of the window defined by law Lw or is in a variable ratio with said first amplitude.

Nevertheless, the second amplitude always remains smaller than or equal to the first amplitude.

Preferably, the second amplitude is increased when the average emission is greater (5->no) than said limit value (Lim), more in particular both the amplitude of Pw and the amplitude of Fw are increased proportionally in order to leave the dynamics of the system unchanged and, at the same time, in order to take into account the previously non-compensated emissions.

Vice versa, the second amplitude can be reduced when the average emission is smaller than or equal to (5->yes) the limit value (Lim), thus improving the performances of the internal combustion engine and, hence, the driveability of the vehicle.

Preferably, the first sliding window Pw has a third amplitude and the second sliding window Fw has a fourth amplitude, the fourth amplitude being in a fixed or variable ratio relative to the third amplitude.

According to a preferred variant of the invention, it is possible, within predetermined limits, to increase the fourth amplitude in order to assess whether the limit value Lim can be respected by only implementing more restrictive engine control parameters, before activating the ATS heating means.

This prevents the ATS heating means from being activated, which generally leads to an increase in fuel consumptions, when the emissions produced in Pw are expected to be compensated with a greater Fw. Taking into account that the main restriction lies in the fact that second amplitude is smaller than or equal to and preferably strictly smaller than the first amplitude, this implies that there is no risk of exceeding the aforesaid limit emission value.

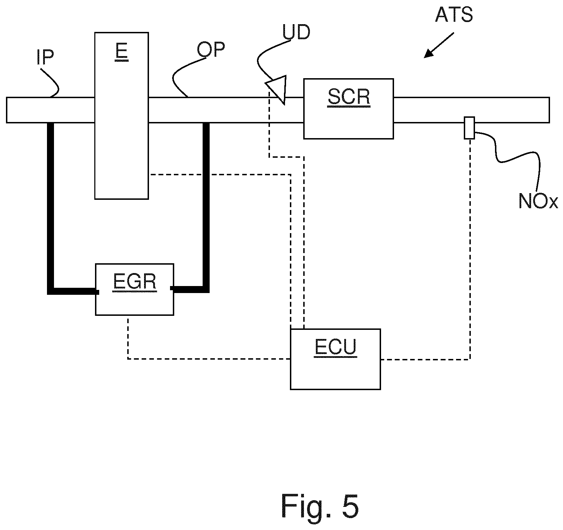

Figure 5 schematically shows an internal combustion engine E provided with a relative exhaust gas after-treatment device ATS.

The ATS comprises at least one pollutant reduction device. In this case, an SCR is shown, which reduces NOx. The concepts of this invention could also be applied to other pollutants, such as, for example, particulate matter, when an open filter is implemented rather than a DPF (Diesel particulate filter) or a GPF (Gasoline particulate filter) .

The internal combustion engine comprises an intake manifold IP and an exhaust manifold OP. A controllable EGR valve connects the intake manifold to the exhaust manifold in order to allow for the recirculation of exhaust gases.

Upstream of the SCR there is a measuring device UD for a urea-based reducing agent. Downstream of the SCR there is a sensor having, as a label, the polluting species measured: NOx.

The terms "upstream" and "downstream" take into account the actual direction of circulation of the gases flowing in the ducts.

A processing unit ECU controls the operation of the internal combustion engine with the relative EGR valve and the operation of the relative ATS.

In particular, the processing unit ECU is configured to control the internal combustion engine E and comprises
+ at least a first interface for controlling at least one of the following combustion parameters:
   - fuel injecting times into a cylinder of said internal combustion engine,
   - ignition times, in case the engine is spark ignited,
   - opening times of an intake valve and/or an exhaust valve of a cylinder of said internal combustion engine,
   - opening of said EGR valve arranged for adjusting an exhaust gas flow produced by said internal combustion engine and recirculated towards said internal combustion engine,
+ at least a second interface for controlling said ATS and relative heating means
+ at least a fourth interface towards said Nox sensor for measuring emissions of at least one pollutant released into the atmosphere.

According to the invention, the processing unit is configured to carry out any one of the variants of the method described above.

This invention can be advantageously implemented by a computer program comprising encoding means for carrying out one or more steps of the method, when the program is run on a computer. Therefore, the scope of protection is extended to said computer program and, furthermore, to computer readable means comprising a stored message, said computer readable means comprising program encoding means for carrying out one or more steps of the method, when the program is run on a computer.

When reading the description above, a skilled person can carry out the subject-matter of the invention without introducing further constructional details.

## Claims

1. A method for controlling an assembly comprising an internal combustion engine (E) and an exhaust gas after treatment device (ATS) of a terrestrial vehicle comprising a procedure for measuring (L1) an emission of at least a pollutant within a legal sliding time window (Lw), having a first amplitude, representing a predetermined amount of work generated, or a predetermined distance travelled, by the vehicle and a procedure for verifying (L2) whether an average emission value in said sliding window (Lw) is less than an emission limit value (Lim), the method further comprising the steps of
(Step 1) generating a first (Pw) and a second (Fw) contiguous sliding window of the work or of the travelled distance having respective amplitudes, wherein said first window comprises an initial end (A1) back in the past and a final end (A2) in the current instant (t(now)) and said second window comprises an initial end (A3) in said current instant (t(now)) and a final end (A4) forward in the future;
(Step 2) measuring a first emission of said at least one pollutant released in said first window (Pw);
(Step 3) estimating a second emission of said at least one pollutant in said second window (Fw) based on current combustion parameters of the internal combustion engine and current operating conditions of said ATS;
(Step 4) calculating an average emission of said at least one pollutant over the set of said first and second sliding windows;
(Steps 7 to 8) controlling said assembly so that said calculated average emission (Step 4) is less than said limit emission value (Lim);
wherein the set of said first and second sliding windows has a second amplitude that is given by the sum of the amplitudes of said first and second windows and is less than said first amplitude,
wherein said second amplitude is in a fixed ratio or in a variable ratio of said first amplitude.

2. The method according to claim 1, wherein said control comprises a first procedure (Step 7) of gradually setting stricter operating parameters for said internal combustion engine by modifying combustion parameters of said internal combustion engine so as to reduce a primary emission of said internal combustion engine, when said average emission of said at least one pollutant exceeds said limit emission value (Lim) and a second procedure (Step 8) for activating means for heating said ATS when it is no longer possible to set stricter parameters for said internal combustion engine.

3. The method according to claim 1 or 2, wherein said control comprises a third procedure (Step 8') for deactivating said heating means when said average emission of said at least one pollutant is less than said limit emission value (Lim) and a fourth procedure (Step 7') for gradually setting less restrictive operating parameters for said internal combustion engine by modifying said combustion parameters so as to increase a primary emission of said internal combustion engine when said heating means are already de-activated, and said average emission of said at least one pollutant is less than said limit emission value (Lim) .

4. The method according to claim 3, comprising the following steps:
(step 5) comparison of said average emission with a limit value (Lim) of emissions per kWh of work generated by the vehicle or per travelled distance unit, if said average emission is less than or equal to (5->yes) said limit value (Lim),
(Step 9) verification of whether the means for heating said ATS are active, if so then (9 = yes)
(Step 8') deactivation of the means for heating said ATS and resuming from step 1, otherwise (9->no)
(Step 7') modification of said combustion parameters so as to increase a primary emission of said internal combustion engine and resuming from said estimation (Step 3),
if, otherwise, said average emission is greater than (5->no) said limit value (Lim), then
(Step 6) verification of said current combustion parameters in respect to said limit combustion parameters, if it results that said current combustion parameters do not coincide (6->no) with said limit combustion parameters
(Step 7) restriction of said combustion parameters and resuming from said estimation (Step 3), otherwise (6->yes)
(Step 8) activation of said means for heating said ATS.

5. The method according to any one of claims 1-4, wherein said second amplitude is in a variable ratio of said first amplitude and is increased when said average emission is greater than (5->no) said limit value (Lim).

6. The method according to claim 5, wherein said second amplitude is reduced when said average emission is less than or equal to (5->yes) said limit value (Lim).

7. The method according to any one of the preceding claims, wherein said first sliding window (Pw) has a third amplitude and said second sliding window (Fw) has a fourth amplitude and wherein said fourth amplitude is in a fixed ratio in respect to said third amplitude.

8. The method according to any one of claims 1-6, wherein said first sliding window (Pw) has a third amplitude and said second sliding window (Fw) has a fourth amplitude and wherein said fourth amplitude is in a variable ratio in respect to said third amplitude.

9. The method according to claim 8, wherein said step of modifying (Step 7) said combustion parameters comprises a sub-step of increasing said fourth amplitude.

10. The method according to any one of the preceding claims, wherein said measurement of said first emission of at least one pollutant released within said first window is achieved by a sensor arranged downstream of said ATS or is estimated by a model.

11. A computer program product comprising instructions which, when the program is executed by a processing unit (ECU) configured to control an internal combustion engine (E), cause the computer to carry out the steps (1 - 8) of any one of claims 1-10.

12. Computer-readable storage medium comprising instructions which, when executed by a processing unit (ECU) configured to control an internal combustion engine (E), cause the computer to carry out the steps(1 - 8) of any one of claims 1-10.

13. A processing unit (ECU) configured to control an internal combustion engine, comprising
+ at least a first interface for controlling at least one of the following combustion parameters:
- fuel injecting times into a cylinder of said internal combustion engine,
- ignition times, when the engine is spark ignited,
- opening times of an intake valve and/or an exhaust valve of a cylinder of said internal combustion engine,
- opening of an EGR valve arranged for adjusting an exhaust gas flow produced by said internal combustion engine and recirculated towards said internal combustion engine,
+ at least a second interface for controlling said ATS and relative heating means
+ at least a fourth interface towards at least a sensor for measuring emissions of at least one pollutant released into the atmosphere,
wherein said processing unit is configured to carry out all the steps of any one of the claims 1-10.

14. An assembly comprising an internal combustion engine and an exhaust after treatment device (ATS) for exhausted gas comprising a processing unit (ECU) according to claim 13.

15. A terrestrial vehicle comprising an assembly according to claim 14.

## Patentansprüche

1. Verfahren zum Steuern einer Anordnung, die eine Brennkraftmaschine (E) und eine Abgasnachbehandlungsvorrichtung (ATS) eines terrestrischen Fahrzeugs umfasst, wobei das Verfahren eine Prozedur zum Messen (L1) einer Emission wenigstens eines Schadstoffs innerhalb eines gesetzlich vorgeschriebenen Gleitzeitfensters (Lw) mit einer ersten Amplitude, die einen vorgegebenen Betrag erzeugter Arbeit oder eine vorgegebene durch das Fahrzeug gefahrene Entfernung repräsentiert, und eine Prozedur zum Überprüfen (L2), ob ein durchschnittlicher Emissionswert in dem Gleitfenster (Lw) kleiner als ein Emissionsgrenzwert (Lim) ist, umfasst, wobei das Verfahren ferner die folgenden Schritte umfasst:
(Schritt 1) Erzeugen eines ersten (Pw) und eines zweiten (Fw) aneinandergrenzenden Gleitfensters der Arbeit oder der gefahrenen Entfernung mit jeweiligen Amplituden, wobei das erste Fenster ein Anfangs-Ende (A1) zurück in der Vergangenheit und ein End-Ende (A2) zu dem aktuellen Zeitpunkt (t(now)) umfasst und wobei das zweite Fenster ein Anfangs-Ende (A3) zu dem aktuellen Zeitpunkt (t(now)) und ein End-Ende (A4) vorwärts in der Zukunft umfasst;
(Schritt 2) Messen einer ersten Emission des wenigstens einen Schadstoffs, der in dem ersten Fenster (Pw) freigesetzt wird;
(Schritt 3) Schätzen einer zweiten Emission des wenigstens einen Schadstoffs in dem zweiten Fenster (Fw) auf der Grundlage aktueller Verbrennungsparameter der Brennkraftmaschine und aktueller Betriebsbedingungen des ATS;
(Schritt 4) Berechnen einer durchschnittlichen Emission des wenigstens einen Schadstoffs über den Satz des ersten und des zweiten Gleitfensters;
(Schritt 7 bis 8) Steuern der Anordnung in der Weise, dass die berechnete durchschnittliche Emission (Schritt 4) kleiner als der Emissionsgrenzwert (Lim) ist;
wobei der Satz des ersten und des zweiten Gleitfenster eine zweite Amplitude aufweist, die durch die Summe der Amplituden des ersten und des zweiten Fensters gegeben ist und die kleiner als die erste Amplitude ist,
wobei die zweite Amplitude in einem festen Verhältnis oder in einem variablen Verhältnis zu der ersten Amplitude ist.

2. Verfahren nach Anspruch 1, wobei die Steuerung eine erste Prozedur (Schritt 7) zum allmählichen Einstellen strengerer Betriebsparameter für die Brennkraftmaschine durch Ändern von Verbrennungsparametern der Brennkraftmaschine, um eine Primäremission der Brennkraftmaschine zu verringern, wenn die durchschnittliche Emission des wenigstens einen Schadstoffs den Emissionsgrenzwert (Lim) übersteigt, und eine zweite Prozedur (Schritt 8) zum Aktivieren von Mitteln zum Heizen des ATS, wenn es nicht mehr möglich ist, strengere Parameter für die Brennkraftmaschine einzustellen, umfasst.

3. Verfahren nach Anspruch 1 oder 2, wobei die Steuerung eine dritte Prozedur (Schritt 8') zum Deaktivieren der Heizmittel, wenn die durchschnittliche Emission des wenigstens einen Schadstoffs kleiner als der Emissionsgrenzwert (Lim) ist, und eine vierte Prozedur (Schritt 7') zum allmählichen Einstellen weniger restriktiver Betriebsparameter für die Brennkraftmaschine durch Ändern der Verbrennungsparameter, um eine Primäremission der Brennkraftmaschine zu erhöhen, wenn die Heizmittel bereits deaktiviert sind und die durchschnittliche Emission des wenigstens einen Schadstoffs kleiner als der Emissionsgrenzwert (Lim) ist, umfasst.

4. Verfahren nach Anspruch 3, das die folgenden Schritte umfasst:
(Schritt 5) Vergleichen der durchschnittlichen Emission mit einem Grenzwert (Lim) von Emissionen pro kWh Arbeit, die durch das Fahrzeug pro gefahrener Entfernungseinheit erzeugt wird, falls die durchschnittliche Emission kleiner oder gleich dem Grenzwert (Lim) ist (5 → ja),
(Schritt 9) Überprüfen, ob die Mittel zum Heizen des ATS aktiv sind, wenn ja, dann (9 = ja)
(Schritt 8') Deaktivieren der Mittel zum Heizen des ATS und Fortsetzen von Schritt 1, andernfalls (9 → nein)
(Schritt 7') Ändern der Verbrennungsparameter, um eine Primäremission der Brennkraftmaschine zu erhöhen, und Fortsetzen von der Schätzung (Schritt 3),
falls die durchschnittliche Emission andernfalls größer als der Grenzwert (Lim) ist (5 → nein), dann
(Schritt 6) Überprüfen der aktuellen Verbrennungsparameter in Bezug auf die Grenzverbrennungsparameter, falls sich ergibt, dass die aktuellen Verbrennungsparameter nicht mit den Grenzverbrennungsparametern übereinstimmen (6 → nein)
(Schritt 7) Beschränken der Verbrennungsparameter und Fortsetzen von der Schätzung (Schritt 3), andernfalls (6 → ja)
(Schritt 8) Aktivieren der Mittel zum Heizen des ATS.

5. Verfahren nach einem der Ansprüche 1-4, wobei die zweite Amplitude in einem variablen Verhältnis zu der ersten Amplitude steht und erhöht wird, wenn die durchschnittliche Emission größer als der Grenzwert (Lim) ist (5 → nein).

6. Verfahren nach Anspruch 5, wobei die zweite Amplitude verringert wird, wenn die durchschnittliche Emission kleiner oder gleich dem Grenzwert (Lim) ist (5 → ja).

7. Verfahren nach einem der vorhergehenden Ansprüche, wobei das erste Gleitfenster (Pw) eine dritte Amplitude aufweist und das zweite Gleitfenster (Fw) eine vierte Amplitude aufweist und wobei die vierte Amplitude in Bezug auf die dritte Amplitude in einem festen Verhältnis steht.

8. Verfahren nach einem der Ansprüche 1-6, wobei das erste Gleitfenster (Pw) eine dritte Amplitude aufweist und das zweite Gleitfenster (Fw) eine vierte Amplitude aufweist und wobei die vierte Amplitude in Bezug auf die dritte Amplitude in einem variablen Verhältnis steht.

9. Verfahren nach Anspruch 8, wobei der Schritt des Änderns (Schritt 7) der Verbrennungsparameter einen Teilschritt des Erhöhens der vierten Amplitude umfasst.

10. Verfahren nach einem der vorhergehenden Ansprüche, wobei das Messen der ersten Emission wenigstens eines Schadstoffs, der in dem ersten Fenster freigesetzt wird, durch einen auf der Ausgangsseite des ATS angeordneten Sensor erzielt wird oder durch ein Modell geschätzt wird.

11. Computerprogrammprodukt, das Anweisungen umfasst, die dann, wenn das Programm durch eine zum Steuern einer Brennkraftmaschine (E) konfigurierte Verarbeitungseinheit (ECU) ausgeführt wird, veranlassen, dass der Computer die Schritte (1-8) eines der Ansprüche 1-10 ausführt.

12. Computerlesbares Speichermedium, das Anweisungen enthält, die dann, wenn sie durch eine zum Steuern einer Brennkraftmaschine (E) konfigurierte Verarbeitungseinheit (ECU) ausgeführt werden, veranlassen, dass der Computer die Schritte (1-8) eines der Ansprüche 1-10 ausführt.

13. Verarbeitungseinheit (ECU), die konfiguriert ist, eine Brennkraftmaschine zu steuern, wobei die Verarbeitungseinheit umfasst:
+ wenigstens eine erste Schnittstelle zum Steuern wenigstens eines der folgenden Verbrennungsparameter:
- Kraftstoffeinspritzzeitpunkte in einen Zylinder der Brennkraftmaschine,
- Zündzeitpunkte, wenn die Kraftmaschine fremdgezündet ist,
- Öffnungszeitpunkte eines Einlassventils und/oder eines Auslassventils eines Zylinders der Brennkraftmaschine,
- Öffnen eines AGR-Ventils, das zum Nachstellen einer Abgasströmung, die durch die Brennkraftmaschine erzeugt wird und zu der Brennkraftmaschine rückgeführt wird, angeordnet ist,
+ wenigstens eine zweite Schnittstelle zum Steuern des ATS und der entsprechenden Heizmittel,
+ wenigstens eine vierte Schnittstelle zu wenigstens einem Sensor zum Messen von Emissionen wenigstens eines in die Atmosphäre freigesetzten Schadstoffs,
wobei die Verarbeitungseinheit konfiguriert ist, alle Schritte nach einem der Ansprüche 1-10 auszuführen.

14. Anordnung, die eine Brennkraftmaschine und eine Abgasnachbehandlungsvorrichtung (ATS) für Abgas, die eine Verarbeitungseinheit (ECU) nach Anspruch 13 enthält, umfasst.

15. Terrestrisches Fahrzeug, das eine Anordnung nach Anspruch 14 umfasst.

## Revendications

1. Procédé de commande d'un ensemble comprenant un moteur à combustion interne (E) et un dispositif de post-traitement de gaz d'échappement (ATS) d'un véhicule terrestre comprenant une procédure destinée à mesurer (L1) une émission d'au moins un polluant à l'intérieur d'une fenêtre glissante de temps légale (Lw), ayant une première amplitude, qui représente une quantité prédéterminée de fonctionnement générée, ou une distance prédéterminée parcourue par le véhicule, et une procédure destinée à vérifier (L2) si une valeur d'émission moyenne dans ladite fenêtre glissante (Lw) est inférieure à une valeur limite d'émission (Lim), le procédé comprenant en outre les étapes consistant à
(Étape 1) générer une première (Pw) et une deuxième (Fw) fenêtres glissantes contiguës du fonctionnement ou de la distance parcourue ayant des amplitudes respectives, dans lequel ladite première fenêtre comprend une extrémité initiale (A1) dans le passé et une extrémité finale (A2) à l'instant présent (t(now)) et ladite deuxième fenêtre comprend une extrémité initiale (A3) audit instant présent (t(now)) et une extrémité finale (A4) dans le futur ;
(Étape 2) mesurer une première émission dudit au moins un polluant dégagé dans ladite première fenêtre (Pw) ;
(Étape 3) estimer une deuxième émission dudit au moins un polluant dégagé dans ladite deuxième fenêtre (Fw) sur la base des paramètres de combustion actuels du moteur à combustion interne et des conditions de fonctionnement actuelles dudit dispositif de post-traitement de gaz d'échappement ;
(Étape 4) calculer une émission moyenne dudit au moins un polluant sur l'ensemble desdites première et deuxième fenêtres glissantes ;
(Étapes 7 à 8) commander ledit ensemble de sorte que ladite émission moyenne calculée (Étape 4) soit inférieure à ladite valeur limite d'émission (Lim) ;
dans lequel l'ensemble desdites première et deuxième fenêtres glissantes présente une deuxième amplitude qui est donnée par la somme des amplitudes desdites première et deuxième fenêtres et est inférieure à ladite première amplitude,
dans lequel ladite deuxième amplitude se trouve dans un rapport fixe ou dans un rapport variable de ladite première amplitude.

2. Procédé selon la revendication 1, dans lequel ladite commande comprend une première procédure (Étape 7) qui consiste à définir progressivement des paramètres de fonctionnement plus restrictifs pour ledit moteur à combustion interne en modifiant les paramètres de combustion dudit moteur à combustion interne de façon à réduire une émission primaire dudit moteur à combustion interne, lorsque ladite émission moyenne dudit au moins un polluant dépasse ladite valeur limite d'émission (Lim), et une deuxième procédure (Étape 8) destinée à activer des moyens destinés à chauffer ledit dispositif de post-traitement de gaz d'échappement lorsqu'il n'est plus possible de définir des paramètres plus restrictifs pour ledit moteur à combustion interne.

3. Procédé selon la revendication 1 ou 2, dans lequel ladite commande comprend une troisième procédure (Étape 8') destinée à désactiver lesdits moyens de chauffage lorsque ladite émission moyenne dudit au moins un polluant est inférieure à ladite valeur limite d'émission (Lim) et une quatrième procédure (Étape 7') destinée à définir progressivement des paramètres de fonctionnement moins restrictifs pour ledit moteur à combustion interne en modifiant lesdits paramètres de combustion de façon à augmenter une émission primaire dudit moteur à combustion interne lorsque lesdits moyens de chauffage sont déjà désactivés, et ladite émission moyenne dudit au moins un polluant est inférieure à ladite valeur limite d'émission (Lim).

4. Procédé selon la revendication 3, comprenant les étapes suivantes :
(Étape 5) la comparaison de ladite émission moyenne avec une valeur limite (Lim) d'émissions par kWh de fonctionnement généré par le véhicule ou par unité de distance parcourue, si ladite émission moyenne est inférieure ou égale à (5->oui) ladite valeur limite (Lim),
(Étape 9) la vérification du fait que les moyens de chauffage dudit dispositif de post-traitement de gaz d'échappement soient actifs ou non et, si oui, alors (9 = oui)
(Étape 8') la désactivation des moyens de chauffage dudit dispositif de post-traitement de gaz d'échappement et la reprise à partir de l'étape 1 et, sinon (9->non),
(Étape 7') la modification desdits paramètres de combustion de façon à augmenter une émission primaire dudit moteur à combustion interne et la reprise à partir de ladite estimation (Étape 3),
si, sinon, ladite émission moyenne est supérieure à (5->non) ladite valeur limite (Lim), alors
(Étape 6) la vérification desdits paramètres de combustion actuels par rapport auxdits paramètres de combustion limites et, s'il en résulte que lesdits paramètres de combustion actuels ne coïncident pas (6->non) avec lesdits paramètres de combustion limites, alors
(Étape 7) la restriction desdits paramètres de combustion et la reprise à partir de ladite estimation (Étape 3) et, sinon (6->oui),
(Étape 8) l'activation desdits moyens destinés à chauffer ledit dispositif de post-traitement de gaz d'échappement.

5. Procédé selon l'une quelconque des revendications 1 à 4, dans lequel ladite deuxième amplitude se trouve dans un rapport variable de ladite première amplitude et est augmentée lorsque ladite émission moyenne est supérieure à (5->non) ladite valeur limite (Lim).

6. Procédé selon la revendication 5, dans lequel ladite deuxième amplitude est réduite lorsque ladite émission moyenne est inférieure ou égale à (5->oui) ladite valeur limite (Lim).

7. Procédé selon l'une quelconque des revendications précédentes, dans lequel ladite première fenêtre glissante (Pw) présente une troisième amplitude et ladite deuxième fenêtre glissante (Fw) présente une quatrième amplitude, et dans lequel ladite quatrième amplitude se trouve dans un rapport fixe par rapport à ladite troisième amplitude.

8. Procédé selon l'une quelconque des revendications 1 à 6, dans lequel ladite première fenêtre glissante (Pw) présente une troisième amplitude et ladite deuxième fenêtre glissante (Fw) présente une quatrième amplitude, et dans lequel ladite quatrième amplitude se trouve dans un rapport variable par rapport à ladite troisième amplitude.

9. Procédé selon la revendication 8, dans lequel ladite étape de modification (Étape 7) desdits paramètres de combustion comprend une sous-étape qui consiste à augmenter ladite quatrième amplitude.

10. Procédé selon l'une quelconque des revendications précédentes, dans lequel ladite mesure de ladite première émission d'au moins un polluant dégagé à l'intérieur de ladite première fenêtre est réalisée par un capteur prévu en aval dudit dispositif de post-traitement de gaz d'échappement ou est estimée par un modèle.

11. Produit de programme informatique comprenant des instructions qui, lorsque le programme est exécuté par une unité de traitement (ECU) configurée pour commander un moteur à combustion interne (E), amènent l'ordinateur à exécuter les étapes (1 à 8) de l'une quelconque des revendications 1 à 10.

12. Support de stockage lisible par ordinateur comprenant des instructions qui, lorsqu'elles sont exécutées par une unité de traitement (ECU) configurée pour commander un moteur à combustion interne (E), amènent l'ordinateur à exécuter les étapes (1 à 8) de l'une quelconque des revendications 1 à 10.

13. Unité de traitement (ECU) configurée pour commander un moteur à combustion interne, comprenant
+ au moins une première interface destinée à commander au moins l'un des paramètres de combustion suivants :
- les temps d'injection de carburant dans un cylindre dudit moteur à combustion interne,
- les temps d'allumage, lorsque le moteur est à bougie,
- les temps d'ouverture d'une soupape d'admission et/ou d'une soupape d'échappement d'un cylindre dudit moteur à combustion interne,
- l'ouverture d'une soupape de recirculation des gaz d'échappement prévue pour ajuster un flux de gaz d'échappement produit par ledit moteur à combustion interne et remis en circulation vers ledit moteur à combustion interne,
+ au moins une deuxième interface destinée à commander ledit dispositif de post-traitement de gaz d'échappement et les moyens de chauffage associés,
+ au moins une quatrième interface vers au moins un capteur destiné à mesurer les émissions d'au moins un polluant dégagé dans l'atmosphère,
dans laquelle ladite unité de traitement est configurée pour exécuter toutes les étapes de l'une quelconque des revendications 1 à 10.

14. Ensemble comprenant un moteur à combustion interne et un dispositif de post-traitement de gaz d'échappement (ATS) pour gaz d'échappement comprenant une unité de traitement (ECU) selon la revendication 13.

15. Véhicule terrestre comprenant un ensemble selon la revendication 14.
